# EUROPÄISCHE PATENTANMELDUNG

(11) **EP 1 120 924 A1**
(43) Veröffentlichungstag der Anmeldung: **01.08.2001**
(21) Anmeldenummer: 00440298.8
(22) Anmeldetag: 16.11.2000
(51) Int. Cl.: H04B 10/135, H04B 10/18

(54) **Verfahren zur Verbesserung der Signalqualität von optischen Signalen, Übertragungssystem sowie Sender**

(30) Priorität: 27.01.2000 DE 10003398
(71) Anmelder: ALCATEL, 75008 Paris (FR)
(72) Erfinder: Wedding, Berthold, Dr., 70825 Korntal-Münchingen (DE); Haslach, Christoph, D-70176 Stuttgart (DE)
(74) Vertreter: Rausch, Gabriele, Dr.

(57) **Zusammenfassung**

Es wird ein Verfahren zur Verbesserung der Signalqualität von optischen Signalen sowie ein Übertragungssystem für die Übertragung von optischen Signalen und ein Sender für die Übertragung von optischen Signalen vorgeschlagen. Übertragungssystem, Sender und Verfahren arbeiten dabei mit einem Polarisationsmodulator der das optische Signal senderseitig moduliert.

## Beschreibung

Es wird ein Verfahren zur Verbesserung der Signalqualität von optischen Signalen sowie ein Übertragungssystem für die Übertragung von optischen Signalen und einem Sender für die Übertragung von optischen Signalen nach der Gattung der unabhängigen Ansprüche vorgeschlagen.

Für die optische Übertragung von hochbitratigen Signalen, wobei es sich um Datenraten von 10 Gbit/s bis 40 Gbit/s handelt, beobachtet man Limitierungen durch physikalische Eigenschaften der Übertragungsfasern. Probleme durch Abschwächungen und chromatische Dispersion werden durch den Einsatz von Faserverstärkern von dispersionsverschobenen Fasern und Dispersionskompensationstechniken überwunden. Doch auch bei Verwendung von Monomodefasern bleibt der Effekt der Polarisationsmodendispersion (PMD) als limitierender Effekt für Faserlänge und Datenrate erhalten. Die PMD hat einen Doppelbrechungseffekt, der in erster Ordnung zu einer Ausbreitung des Signals auf zwei unterschiedlichen Wegen und somit zu einer Signalverzerrung führt. Die Verzerrung durch PMD ist statistischer Natur und ändert sich mit der Zeit. Vor allem unterschiedliche Umgebungstemperaturen führen zu einer Fluktuation der PMD. Um trotz dieser Dispersionseffekte auswertbare Signale zu bekommen, werden die unterschiedlichsten Arten von PMD-Kompensation oder Filterung in Empfängern für optische Signale eingesetzt.

Beispielsweise werden in dem Übersichtsartikel "Equalization of Bit Distortion Induced by Polarization Mode Dispersion", H. Bülow, NOC'97, Antwerp, Seite 65 bis 72 eine Vielzahl von Möglichkeiten beschrieben, wie die Polarisationsmodendispersion ausgeglichen werden kann. Eine Möglichkeit die Probleme mit der Polarisationsmodendispersion zu lösen, ist es, im Empfänger einen Polarisationskontroller zu betreiben und die Polarisation des optischen Signals adaptiv an die Polarisationsdispersion der Übertragungsstrecke anzupassen. Die Information über die Polarisationsdispersion der Übertagungsstrecke erfolgt dabei über einen Rückkanal. Eine solche Polarisationskontrolle ist aufwendig und muss für jedes optische Signal einer Wellenlänge getrennt realisiert werden. Das ist gerade dann problematisch, wenn das optische Signal ein aus einem Wellenlängenmultiplex zusammengesetztes Signal ist. Gerade in hochbitratigen Datenübertragungssystemen werden die Signale häufig aus unterschiedlichen Wellenlängensignalen zusammengesetzt. Dieses WDM (Wavelength Division Multiplex) Verfahren ermöglicht die Übertragung von Daten, die auf einer Anzahl modulierter optischer Träger, deren Frequenz sich unterscheidet, übertragen werden. Gerade in einem solchen Fall in dem mehrere voneinander unabhängig arbeitende Laser als Quellen des optischen Signals parallel zueinander arbeiten ist eine aktive Anpassung der Polarisationsebene der einzelnen Signale nicht mehr möglich.

Das erfindungsgemäße Verfahren sowie Übertragungssystem hat dem gegenüber den Vorteil, dass keinerlei aktive Anpassung des Übertragungssystem an die Probleme der Polarisationsmodendispersion stattfindet, sondern dass die Effekte der Polarisationsmodendispersion durch Modulation der Polarisationsebene so statistisch verteilt werden, dass - über die gesamten zu übertragenden optische Signale gemittelt - ein besseres Übertragungsverhalten zu erzielen ist. Vorteilhaft ist dabei, dass das Übertragungssystem bei einer bestimmten Polarisationsstellung des Signals und einer bestimmten Polarisationsmodendispersion zu sehr hohen Bitfehlerraten führt und durch die Modulation aus diesem Zustand herausgerissen wird. Auf der anderen Seite kann das System Polarisationszustände haben, in dem das System nahezu fehlerfrei arbeitet. Durch die Modulation vermeidet man das Verharren des Systems in einem sehr negativen Übertragungszustand, während man wiederum auch das Verharren in einem positiven Zustand der Übertragung zeitlich begrenzt. Durch die Modulation erhält man eine bessere statistische Verteilung von positiven und negativen Übertragungsverhalten durch Polarisationszuständen des optischen Signals über die Zeit gesehen.

Weitere Ausbildungen aus Maßnahmen des erfindungsgemäßen Verfahrens sowie des erfindungsgemäßen Übertragungssystems sind in den abhängigen Ansprüchen näher erläutert.

Das Übertragungssystem für ein Einkanalsystem ist vorteilhafterweise auch für ein Wellenlängenmultiplex einsetzbar. Gerade für ein solches Wellenlängenmultiplexübertragungssystem wird ebenfalls nur ein Polarisationsmodulator benötigt.

Weiterhin ist es von Vorteil in dem Übertragungssystem ein FEC Verfahren (Forward Error Correction) einzusetzen. Gerade in der Kombination der durch die Modulation kurzzeitig auftretenden Bitfehlerraten mit einem FEC-Algorithmus sind besonders vorteilhafte Übertragungswerte zu erreichen. Die Modulation des Polarisationszustandes des optischen Signals erfolgt dabei vorteilhafterweise mit einer Frequenz, die kleiner als die Bitrate ist, aber im Bereich der FEC Rahmenfrequenz. Um das Übertragungssystem und das Verfahren noch weiter zu verbessern, sind PMD-Entzerrer im Empfänger einzusetzen.

Eine mögliche Ausbildungsform der Erfindung ist in den Zeichnungen beschrieben und in der nachfolgenden Beschreibung näher erläutert.

Es zeigt
Figur 1 ein WDM-Übertragungssystem,
Figur 2 einen optischen Sender,
Figur 3 einen Sender für ein Wellenlängenmultiplex.
Figur 4 ein zweites Ausführungsbeispiel für ein WDM-Übertragungssystem.

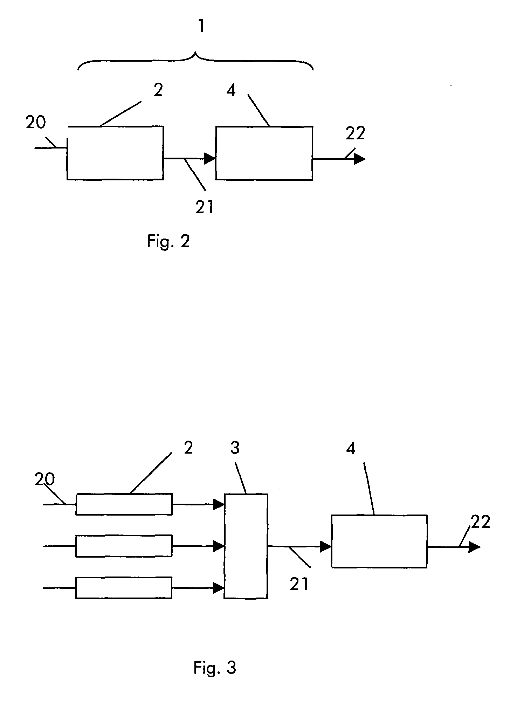

Figur 2 zeigt den einfachsten Aufbau eines erfindungsgemäßen Senders. Der Sender 1 besteht aus einem elektrisch-optischen Wandler 2 und einem Polarisationsmodulator 4. Das eingangsseitig vorliegende elektrische Signal 20 wird im elektrisch-optischen Wandler 2 in ein optisches Signal 21 gewandelt. Dieses optische Signal 21 weist einen bestimmten Polarisationszustand auf. Der Polarisationsmodulator 4 moduliert den Polarisationszustand des optischen Signals 21 zu einem optischen Ausgangssignal 22 mit modulierter Polarisation. Der Modulationsgenerator ist in dieser Zeichnung nicht getrennt dargestellt. Als elektrisch-optischer Wandler dient eine Laserdiode, die entweder direkt moduliert wird oder deren Licht einen externen Modulator durchläuft.

Für den Einsatz in einem Wellenlängenmultiplex dient ein Sender in der Ausführungsform der Figur 3. Es werden mehrere elektrisch-optische Wandler 2 eingesetzt. Diese elektrisch-optischen Wandler 2 wandeln elektrische Eingangssignale 20 in optische Signale 21 unterschiedlicher Wellenlänge um. Die optischen Eingangssignale liegen an einem Wellenlängenmultiplexer 3 an. Das Ausgangssignal 23 des Wellenlängenmultiplexers 3 enthält alle Informationen der unterschiedlichen Wellenlängenkanäle. Dieses Signal, das unterschiedliche Polarisationszustände der unterschiedlichen elektrisch-optischen Wandler 2 enthält wird zusätzlich im Polarisationsmodulator 4 in den Polarisationszuständen moduliert. Das polarisationsmodulierte optische Signal 22 wird auf die Übertragungsstrecke gegeben. Gerade für ein solches Wellenlängenmultiplex Übertragungsverfahren ist es von Bedeutung, dass das System nicht in einem Polarisationszustand für einen Kanal verharrt, in dem hohe Bitfehlerraten erzeugt werden. Das führt unter Umständen zu einem Totalausfall eines Wellenlängenkanals. Durch die Modulation wird dieser Kanal in Polarisationszustände gebracht, deren Übertragungseigenschaften zu deutlichen Verbesserungen der Bitfehlerraten führen.

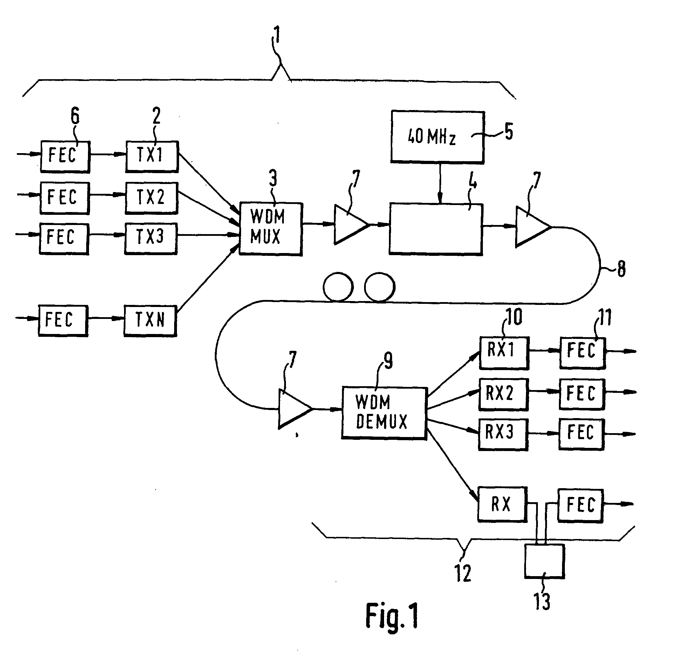

Eine weitere Verbesserung des Verfahrens ist in Figur 1 zu sehen.
Figur 1 zeigt ein komplettes Übertragungssystem für optische Signale.
Ein Sender 1 ist mit einer Übertragungsstrecke 8 verbunden. Die Übertragungsstrecke 8 endet an einem Empfänger 12. Der hier gezeichnete Sender 1 weist gegenüber dem in Figur3 beschriebenen Sender weitere Komponenten auf. Das elektrische Eingangssignal liegt zunächst an einer FEC-Einheit 6 an. Das elektrische Eingangssignal geht vom Ausgang der FEC-Einheit 6 an den Eingang des elektrisch-optischen Wandlers 2. Der Ausgang der elektrisch-optischen Wandler 2 liegt eingangsseitig an dem Wellenlängenmultiplexer 3 an. Der Ausgang des Wellenlängenmultiplexers ist in diesem Ausführungsbeispiel mit einem Verstärker 7 verbunden. Dieser ist wiederum mit dem Polarisationsmodulator 4 und einem weiteren Verstärker 7 verbunden. Der Polarisationsmodulator 4 steht mit einem Generator 5 für die Modulationsfrequenz in Verbindung. Das Signal des Verstärkers 7 geht über die Übertragungsstrecke 8. Das Signal liegt am Eingang eines Empfängers 12 an. In diesem Fall ist wiederum ein Verstärker 7 die erste Eingangsstufe. Der Ausgang des Verstärkers 7 ist mit einem Wellenlängendemultiplexer 9 verbunden, dessen Ausgänge jeweils an einem Eingang eines optisch-elektrischen Wandlers 10 anliegen. Die Ausgänge der optisch-elektrischen Wandler 10 sind mit FEC-Regeneratoren 11 verbunden. Für die Übertragung der optischen Signale in einem solchen Übertragungssystem wird die Polarisation des optischen Signals beispielsweise eines 10 Gbit/s-Signals mit einer hohen Frequenz moduliert. Die Modulationsfrequenz beträgt beispielsweise 40 MHz. Ein Übertragungssystem mit Polarisationsmodendispersion kann sich unter gewissen Bedingungen als besonders störungsanfällig erweisen. Es kann beispielsweise ein Fall auftreten dass die differentielle Gruppenlaufzeit gerade eine Bitperiode beträgt und die Leistung in den beiden zueinander orthogonal polarisierten Moden gerade gleich ist. In diesen Fällen kann auch der Einsatz eines FEC-Verfahrens keine guten Ergebnisse bei der Wiedergewinnung des Signals gewährleisten. Durch die Modulation der Polarisation wird das System aus einem solchen Zustand "herausmoduliert". Die Polarisation des optischen Signals wird mit einer hohen Frequenz moduliert. Diese Frequenz sollte hoch genug sein, damit die Bitfehler mit einem FEC-Verfahren korrigiert werden können. Durch die Modulation mit der hohen Frequenz und die Mittelung über die Polarisationsmodendispersion treten Bitfehlerraten in einer kurzen Zeitskala auf. Die resultierende Bitfehlerrate kann dann von einem FEC-Verfahren weiter verringert werden. Durch den Mittelungseffekt ist das Verhalten des Übertragungssystems gegenüber einem nicht modulierten System verbessert.

Eine weitere Auswirkungsform verwendet im Empfänger 12 einen PMD-Entzerrer. Dieser Filter ist als elektronisches Filter 13 realisiert wie er beispielsweise in der deutschen Anmeldung 199 36 254.8 beschrieben ist. Der elektronische Entzerrer 13 ist beispielhaft außerhalb der optisch/elektrischen Wandler 10 eingezeichnet. Der Entzerrer ist in einer anderen Ausführungsform in den optisch/elektrischen Wandler selbst integriert. Bei Verwendung eines elektronischen PMD-Filters ist darauf zu achten, dass die Reaktionszeit des Filters schnell genug ist, um der Modulation der Polarisation zu folgen.
In einer weiteren Ausführungsform wird im Empfänger 12 vor der optisch/elektrischen Wandlung ein optisches PMD-Filter eingesetzt.
Eine weitere Ausführungsform verwendet im Empfänger 12 zuerst ein optisches PMD-Filter bevor das optische Signal gewandelt wird und nach der Wandlung einen elektronischen PMD-Entzerrer.

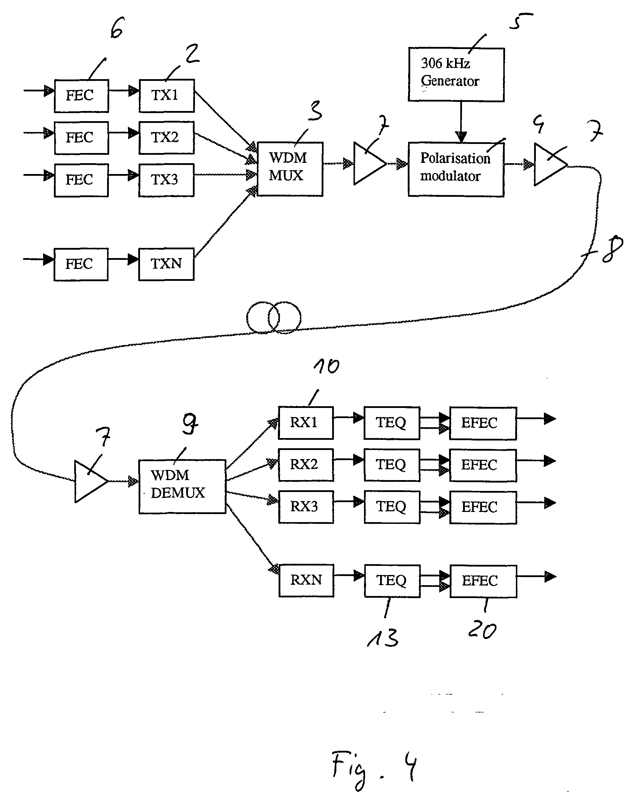

Figur 4 stellt ein weiteres verbessertes Ausführungsbeispiel des WDM Übertragungssystems dar. In dieser Form wird ein "Error-and-Erasure" Algorithmus angewandt. Dieser bekannte Algorithmus in Kombination mit einem schnellen Filter 13 erlaubt eine Verdopplung der Länge eines Fehlerburst und erhöht die PMD Toleranz des optischen Empfängers. Als Filter 13 kommt beispielsweise eine Ausführungsform des transversalen Equalizers , nach DE 199936254.8 in Frage. Dieses Filter liefert Informationen für die Anwendung der error-and erasure Methode abgeleitet von den Kontroll- Parametern des Filters 13. Das Filter muss Informationen über den Ort des Fehlers im Signal liefern, um die nachfolgende Stufe der error-and erasure - Verarbeitung des Signals zu unterstützen.

Für die Auslegung eines Übertragungssystems ist die Anpassung der einzelnen Komponenten notwendig. Die in Fig. 1 und Fig. 4 beschrieben Form stellt einen exemplarische Lösung dar wobei für die Anwendung des erfinderischen Gedanken keine bestimmte Kombination von Komponenten vorhanden sein muss.

## Patentansprüche

1. Übertragungssystem für die Übertragung von optischen Signalen über Übertragungsstrecken (8) mit Sendern (1) und Empfängern (12), dadurch gekennzeichnet, dass das optische Signal (21) senderseitig einen Polarisations-Modulator (4) durchläuft.

2. Übertragungssystem nach Anspruch 1, dadurch gekennzeichnet, dass das optische Signal (21) aus Signalen eines Wellenlängenmultiplex (20) zusammengesetzt ist.

3. Übertragungssystem nach Anspruch 1, dadurch gekennzeichnet, dass das Übertragungssystem Komponenten (6, 11) für eine FEC (Forward Error Correction) aufweist.

4. Übertragungssystem nach Anspruch 1, dadurch gekennzeichnet, dass der Empfänger (12) Filter (13) für die Kompensation von PMD-Effekten aufweist.

5. Sender für die Übertragung von optischen Daten über Glasfaserübertragungsstrecken mit wenigstens einem elektrisch/optischen Wandler und einem Polarisations-Modulator verbunden mit einem Generator (5) mit festeinstellbarer Frequenz.

6. Sender nach Anspruch 5 mit einem Multiplexer (3) für das Multiplexen von optischen Signalen unterschiedlicher Wellenlänge.

7. Sender nach Anspruch 5 mit FEC-Komponenten (6).

8. Verfahren zur Verbesserung der Signalqualität von optischen Signalen, die aufgrund von Polarisationsmoden Dispersion verzerrt sind, wobei das optische Signal vor der Übertragung über eine Übertragungsstrecke in seiner Polarisationsrichtung variiert wird.

9. Verfahren nach Anspruch 7 wobei das optische Signal periodisch in seiner Polarisationsrichtung mit variiert wird, wobei die Frequenz gross genug ist, um den Einsatz eines FEC- Verfahrens möglich zu machen.

10. Empfänger (12) zur Verwendung in einem Übertragungssystem nach Anspruch 1 wobei der Empfänger Demultiplexer (9), optische Empfänger 81), Filter (13) und FEC Regeneratoren (13) enthält.

11. Empfänger nach Anspruch 10 wobei error-and erasure- Regeneratoren mit linearen Equalizern verbunden sind.
